# EUROPEAN PATENT APPLICATION

(11) **EP 4 845 117 A1**
(43) Date of publication of application: **25.11.2026**
(21) Application number: 24918040.7
(22) Date of filing: 22.08.2024
(51) Int. Cl.: H04L 45/24

(54) **MULTI-LINK INFORMATION TRANSMISSION METHOD, ELECTRONIC DEVICE AND STORAGE MEDIUM**

(30) Priority: 17.01.2024 CN 202410068536
(71) Applicant: ZTE Corporation, Shenzhen, Guangdong 518057 (CN)
(72) Inventor: YUAN, Liquan, Shenzhen, Guangdong 518057 (CN)
(74) Representative: Vossius & Partner Patentanwälte Rechtsanwälte mbB
(86) International application number: PCT/CN2024/113941
(87) International publication number: WO 2025/152431

(57) **Abstract**

Embodiments of the present disclosure provide a method of multi-link information transmission, an electronic device, and a storage medium. The method includes: transmitting, by a first multi-link device and over a first link, a first multi-link information frame including multi-link coordination request information to a second multi-link device; receiving, by the first multi-link device, a second multi-link information frame transmitted by the second multi-link device over the first link, where the second multi-link information frame includes multi-link configuration information in response to the multi-link coordination request information; and transmitting, by the first multi-link device and to the second multi-link device, a third multi-link information frame carrying the multi-link configuration information. The embodiments of the present disclosure aim to implement multi-link information transmission under a coordinated operation scenario of the multi-link devices, which can improve the information transmission efficiency and increase a channel utilization rate.

## Description

### FIELD

The present disclosure relates to the field of wireless communication technology, and for example, to a method of multi-link information transmission, an electronic device, and a storage medium.

### BACKGROUND

Fiber to the room (FTTR) technology is to connect wireless router access points (APs) in different rooms or positions in scenarios such as homes or small and medium-sized enterprises through optical fibers, thus providing high-bandwidth and high-reliability connections between the plurality of APs. A point-to-multipoint optical distribution network may be used to implement a connection between a master control AP and a slave AP. With the continuously increasing requirements for information security, how to ensure the security of user information transmission in FTTR scenarios has become a current research focus. At present, for APs involving two operating channels that are the same or overlapping, the pre-association security negotiation (PASN) protocol can be used to exchange multicast packet information. However, in multi-AP collaborative network scenarios, when operating channels of two links are the same or partially overlapping, two access point multi link devices (AP MLDs) may need to perform coordinated operations over a plurality of links, such as transmitting multi-link AP coordination information frames, which requires the delivery of multicast key information for a plurality of sets of coordination frames. In view of this situation, the related art requires transmitting three PASN frame exchanges on each link, and then negotiating a coordination request for one link during each exchange while transmitting the multicast key information for the link, resulting in reduced channel utilization rate.

### SUMMARY

The present disclosure aims to provide a method of multi-link information transmission, an electronic device, and a storage medium, so as to implement multi-link information transmission under a coordinated operation scenario of multi-link devices, which can improve the information transmission efficiency and increase a channel utilization rate.

An embodiment of the present disclosure provides a method of multi-link information transmission, applied to a first multi-link access device. The method includes:
transmitting, by a first multi-link device and over a first link, a first multi-link information frame including multi-link coordination request information to a second multi-link device;
receiving, by the first multi-link device and over the first link, a second multi-link information frame transmitted by the second multi-link device, where the second multi-link information frame includes multi-link configuration information in response to the multi-link coordination request information; and
transmitting, by the first multi-link device and to the second multi-link device, a third multi-link information frame carrying multi-link configuration information.

An embodiment of the present disclosure further provides a method of multi-link information transmission, applied to a second multi-link device. The method includes:
receiving, by the second multi-link device and over a first link, a first multi-link information frame, where the first multi-link information frame includes multi-link coordination request information and is transmitted by a first multi-link device;
transmitting, by the second multi-link device and over the first link, a second multi-link information frame to the first multi-link device, where the second multi-link information frame includes multi-link configuration information in response to the multi-link coordination request information; and
receiving, by the second multi-link device, a third multi-link information frame that carries multi-link configuration information and that is transmitted by the first multi-link device.

An embodiment of the present disclosure further provides an electronic device. The electronic device includes:
one or more processors; and
a memory configured to store one or more programs.

The one or more programs, when executed by the one or more processors, cause the one or more processors to implement any one of the methods according to the embodiments of the present disclosure.

An embodiment of the present disclosure further provides a computer-readable storage medium, having one or more programs stored thereon. The one or more programs, when executed by the one or more processors, cause any one of the methods according to the embodiments of the present disclosure to be implemented.

### BRIEF DESCRIPTION OF THE DRAWINGS

To describe the technical solutions of the embodiments of the present disclosure more clearly, the following briefly introduces the accompanying drawings required for describing the embodiments. Apparently, the accompanying drawings in the following descriptions are merely some embodiments of the present disclosure, and those of ordinary skill in the art may still derive other accompanying drawings from these accompanying drawings without creative efforts.
FIG. 1 is a flowchart of a method of multi-link information transmission according to an embodiment of the present disclosure;
FIG. 2 is a flowchart of another method of multi-link information transmission according to an embodiment of the present disclosure;
FIG. 3 is a schematic structural diagram of a received multicast key field according to an embodiment of the present disclosure;
FIG. 4 is a schematic structural diagram of a multi-link configuration information field according to an embodiment of the present disclosure;
FIG. 5 is a schematic structural diagram of a multi-link configuration information field according to an embodiment of the present disclosure;
FIG. 6 is a schematic structural diagram of a multi-link configuration information field according to an embodiment of the present disclosure;
FIG. 7 is an example diagram of multi-link information transmission according to an embodiment of the present disclosure;
FIG. 8 is an example diagram of PASN frame exchange between a station and an access point according to an embodiment of the present disclosure;
FIG. 9 is a schematic structural diagram of a first PASN authentication frame according to an embodiment of the present disclosure;
FIG. 10 is a schematic structural diagram of a second PASN authentication frame according to an embodiment of the present disclosure;
FIG. 11 is a schematic structural diagram of a third PASN authentication frame according to an embodiment of the present disclosure;
FIG. 12 is an example diagram of multi-link information exchange according to an embodiment of the present disclosure;
FIG. 13 is a schematic structural diagram of a multi-link information transmission apparatus according to an embodiment of the present disclosure;
FIG. 14 is a schematic structural diagram of another multi-link information transmission apparatus according to an embodiment of the present disclosure; and
FIG. 15 is a schematic structural diagram of an electronic device according to an embodiment of the present disclosure.

### DETAILED DESCRIPTION OF EMBODIMENTS

It should be understood that specific embodiments described herein are merely used to explain the present disclosure and are not intended to limit the present disclosure.

In subsequent descriptions, suffixes such as "module", "component", or "unit" used to denote elements are solely for the convenience of describing the present disclosure and carry no specific meaning. Therefore, "module", "component", or "unit" may be used interchangeably.

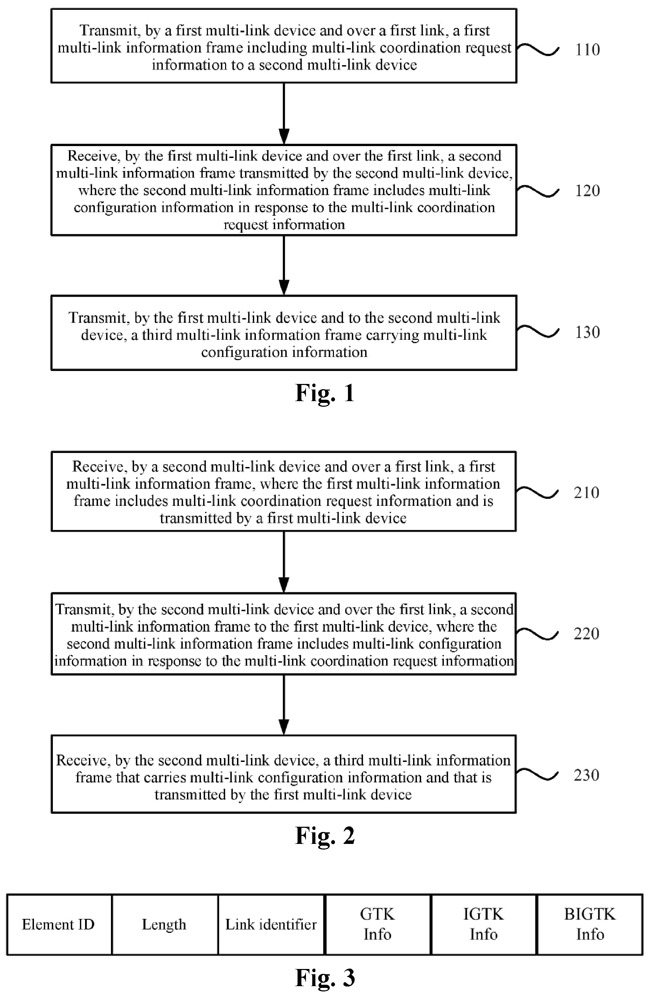

FIG. 1 is a flowchart of a method of multi-link information transmission according to an embodiment of the present disclosure. This embodiment of the present disclosure is applicable to a case of multi-link information transmission between multi-link access devices. Referring to FIG. 1, the method according to this embodiment of the present disclosure specifically includes:

Step 110: Transmit, by a first multi-link device and over a first link, a first multi-link information frame including multi-link coordination request information to a second multi-link device.

In this embodiment of the present disclosure, the first multi-link device may transmit the first multi-link information frame to the second multi-link device through the first link, and the first multi-link information frame is used by the first multi-link device to request multi-link coordination from the second multi-link device. Specifically, the first multi-link information frame may be specifically an information frame, which may include a management frame or a data frame. For example, the first multi-link information frame may include the management frame such as an action frame or an authentication frame, and may also include the data frame such as an EAPOL frame.

Step 120: Receive, by the first multi-link device and over the first link, a second multi-link information frame transmitted by the second multi-link device, where the second multi-link information frame includes multi-link configuration information in response to the multi-link coordination request information.

In this embodiment of the present disclosure, after receiving the first multi-link information frame, the second multi-link device may respond to a multi-link coordination request carried in the first multi-link information frame, thereby generating the second multi-link information frame. The second multi-link information frame may carry the multi-link configuration information that may respond to the multi-link coordination request carried in the first multi-link information frame. The second multi-link device may transmit the second multi-link information frame to the first multi-link device through the first link, and the first multi-link device receives the second multi-link information frame.

Step 130: Transmit, by the first multi-link device and to the second multi-link device, a third multi-link information frame carrying multi-link configuration information.

In this embodiment of the present disclosure, the first multi-link device may further transmit the third multi-link information frame to the second multi-link device, and the third multi-link information frame may carry the multi-link configuration information.

FIG. 2 is a flowchart of another method of multi-link information transmission according to an embodiment of the present disclosure. This embodiment of the present disclosure is applicable to a case of multi-link information transmission between multi-link access devices. Referring to FIG. 2, the method according to this embodiment of the present disclosure specifically includes:

Step 210: Receive, by a second multi-link device and over a first link, a first multi-link information frame, where the first multi-link information frame includes multi-link coordination request information and is transmitted by a first multi-link device.

In this embodiment of the present disclosure, the second multi-link device may receive, by the first link, the first multi-link information frame transmitted by the first multi-link device, and the first multi-link information frame is used by the first multi-link device to request multi-link coordination from the second multi-link device. Specifically, the first multi-link information frame may be specifically an information frame, which may include a management frame or a data frame. For example, the first multi-link information frame may include the management frame such as an action frame or an authentication frame, and may also include the data frame such as an EAPOL frame.

Step 220: Transmit, by the second multi-link device and over the first link, a second multi-link information frame to the first multi-link device, where the second multi-link information frame includes multi-link configuration information in response to the multi-link coordination request information.

In this embodiment of the present disclosure, after receiving the first multi-link information frame, the second multi-link device may respond to a multi-link coordination request carried in the first multi-link information frame, thereby generating the second multi-link information frame. The second multi-link information frame may carry the multi-link configuration information that may respond to the multi-link coordination request carried in the first multi-link information frame. The second multi-link device may transmit the second multi-link information frame to the first multi-link device through the first link, and the first multi-link device receives the second multi-link information frame.

Step 230: Receive, by the second multi-link device, a third multi-link information frame that carries multi-link configuration information and that is transmitted by the first multi-link device.

In this embodiment of the present disclosure, the second multi-link device may further receive the third multi-link information frame transmitted by the first multi-link device, and the third multi-link information frame may carry the multi-link configuration information.

In some embodiments of the present disclosure, the multi-link coordination request information includes at least one of the following:
identification information of each link of the first multi-link device, link configuration information, multi-link device information, or link capability set information.

In the embodiments of the present disclosure, the multi-link coordination request information carried in the first multi-link information frame may include information requesting multi-link coordination, and may include the identification information of each link of the first multi-link device, the link configuration information, the multi-link device information, and the link capability set information. The identification information of each link of the first multi-link device may be identification information of each link of the first multi-link device, such as Link ID or Link MAC address. The link configuration information may include attribute information of each link configuration, including an operating channel, a bandwidth, a primary channel number, etc. The multi-link device information may be information indicating attributes of the first multi-link device, and may include an access point multi-link device media access control layer address of the first multi-link device. The link capability set information may be a set of attribute information of each link capability of the first multi-link device.

In some other embodiments of the present disclosure, the multi-link configuration information in the second multi-link information frame includes at least one of the following:
identification information of each link of the second multi-link device, link configuration information, multi-link device information, link coordination status information, or received multicast key information of each link of the first multi-link device.

In the embodiments of the present disclosure, the multi-link configuration information written in the second multi-link information frame may include one or more of: the identification information of each link of the second multi-link device, the link configuration information, the multi-link device information, the link coordination status information, or the received multicast key information of each link of the first multi-link device. The identification information of each link of the second multi-link device may be identification information of each link in the second multi-link device. The link configuration information may include information such as an operating channel, a bandwidth, and a primary channel number. The multi-link device information may be attribute information of the second multi-link device, and may include an access point media access control layer address of the second multi-link device. The received multicast key information of each link of the first multi-link device may be key information determined by the second multi-link device for the first multi-link device to perform multicast reception on each link.

In some embodiments of the present disclosure, link coordination status information in multi-link coordination response information indicates an unsuccessful status, and the second multi-link information frame does not present at least one of: identification information, the link configuration information, multi-link device information, or received multicast key information of each link of the second multi-link device.

In the embodiments of the present disclosure, the link coordination status information in the multi-link configuration information of the second multi-link information frame indicates an unsuccessful status, and the second multi-link information frame does not present at least one of: identification information of each link of the second multi-link device, link configuration information, multi-link device information, or received multicast key information of each link of the second multi-link device.

In the embodiments of the present disclosure, the link coordination status information in the multi-link configuration information of the second multi-link information frame indicates the unsuccessful status, that is, the second multi-link device fails in responding to the multi-link coordination request information of the first multi-link device, and the second multi-link information frame does not present one or more of the identification information of each link of the second multi-link device, the link configuration information, the multi-link device information, or the received multicast key information of each link of the first multi-link device.

In some embodiments of the present disclosure, the multi-link configuration information in the third multi-link information frame includes at least one of the following:
received multicast key information of each link of the second multi-link device.

In the embodiments of the present disclosure, the multi-link configuration information in the third multi-link information frame transmitted by the first multi-link device to the second multi-link device may at least include the received multicast key information of each link of the second multi-link device, that is, the third multi-link information frame at least includes key information used by the second multi-link device to receive multicast on each link.

Based on the foregoing embodiments of the present disclosure, at least one of the following:
the multi-link configuration information of the second multi-link information frame carries access point identification information assigned for the first multi-link device at each link; or
the multi-link configuration information of the third multi-link information frame carries access point identification information assigned for the second multi-link device at each link.

In the embodiments of the present disclosure, at least one of the second multi-link information frame or the third multi-link information frame carries the access point identification information of each link of the corresponding multi-link device.

In some embodiments of the present disclosure, multicast keys of the first multi-link device and the second multi-link device are the same, and one of the second multi-link information frame or the third multi-link information frame carries received multicast key information of each link.

Specifically, the first multi-link device and the second multi-link device may use the same multicast key. Correspondingly, only one copy of the received multicast key information on each link may be transmitted in the second multi-link information frame and the third multi-link information frame. That is, if a received multicast key on each link is transmitted in the second multi-link information frame, the received multicast key on each link is not transmitted in the third multi-link information frame, or if the received multicast key on each link is not transmitted in the second multi-link information frame, the received multicast key on each link is transmitted in the third multi-link information frame.

In some embodiments of the present disclosure:
the access point identification information is assigned unidirectionally, where the multi-link configuration information in one of the second multi-link information frame or the third multi-link information frame carries the access point identification information assigned to each link.

In the embodiments of the present disclosure, the access point identification information is assigned unidirectionally. That is, the access point identification information of each link is assigned by the first multi-link device or by the second multi-link device, and only the multi-link configuration information in one of the second multi-link information frame or the third multi-link information frame carries the access point identification information assigned to each link.

In some embodiments of the present disclosure, the access point identification information assigned on all links is the same, and the access point identification information is carried in a multi-link device information set of the second multi-link information frame or the third multi-link information frame.

Specifically, the same access point identification information may be assigned to all the links between the first multi-link device and the second multi-link device, and the access point identification information may be carried in the multi-link device information set of the second multi-link information frame or the third multi-link information frame.

In some other embodiments of the present disclosure:
access point identifications assigned on all the links are different, and the access point identification information is carried in a link configuration information set of the second multi-link information frame or the third multi-link information frame.

Specifically, different access point identification information may be assigned to all the links between the first multi-link device and the second multi-link device, and the access point identification information may be carried in the link configuration information set of the second multi-link information frame or the third multi-link information frame.

In some embodiments of the present disclosure, the received multicast key information in the second multi-link information frame or the third multi-link information frame is transmitted in an encrypted manner.

In the embodiments of the present disclosure, the received multicast key information may be transmitted in the encrypted manner. That is, when the received multicast key information is transmitted through the second multi-link information frame and/or the third multi-link information frame, the received multicast key information may be in an encrypted status in the second multi-link information frame and/or the third multi-link information frame.

In some embodiments of the present disclosure, the received multicast key information includes an element number information field, a field length information field, a link identifier field, a group temporary key information field, an integrity group temporary key information field, and a beacon frame integrity group temporary key information field.

In the embodiments of the present disclosure, referring to FIG. 3, the received multicast key information may be composed of the element number information (Element ID) field, the field length information field, the link identifier field, the group temporary key information (GTK Info) field, the integrity group temporary key information (IGTK Info) field, and the beacon frame integrity group temporary key information (BIGTK Info) field. Field descriptions of the received multicast key information may be as shown in Table 1:

**Table 1 Descriptions of Received Multicast Key Fields**

| Field Name | Field Description | Remark |
|---|---|---|
| Element ID | Element ID information | |
| Length | Field length information | |
| Link identifier | Link identifier | |
| GTK Info | Group temporal key (GTK) information | |
| IGTK info | Integrity group temporal key (IGTK) information | |
| BIGTK info | Beacon frame integrity group | |
| | temporal key (BIGTK) information | |

In some embodiments of the present disclosure, the received multicast key information and the access point identification information in the multi-link configuration information are transmitted in the encrypted manner.

In the embodiments of the present disclosure, the received multicast key information and the access point identification information included in the multi-link configuration information in at least one of the second multi-link frame or the third multi-link frame are transmitted in the encrypted manner.

Based on the foregoing embodiments of the present disclosure, the multi-link configuration information includes an element identification information field, the field length information field, a link identifier information field, an assignment bitmap information field, and an assignment information set field, where the assignment bitmap information field includes an access point identification information indication field, a group temporary key information indication field, an integrity group temporary key information indication field, and a beacon frame integrity group temporary key information indication field, and the assignment information set field includes a group temporary key information field, an integrity group temporary key information field, and a beacon frame integrity group temporary key information field.

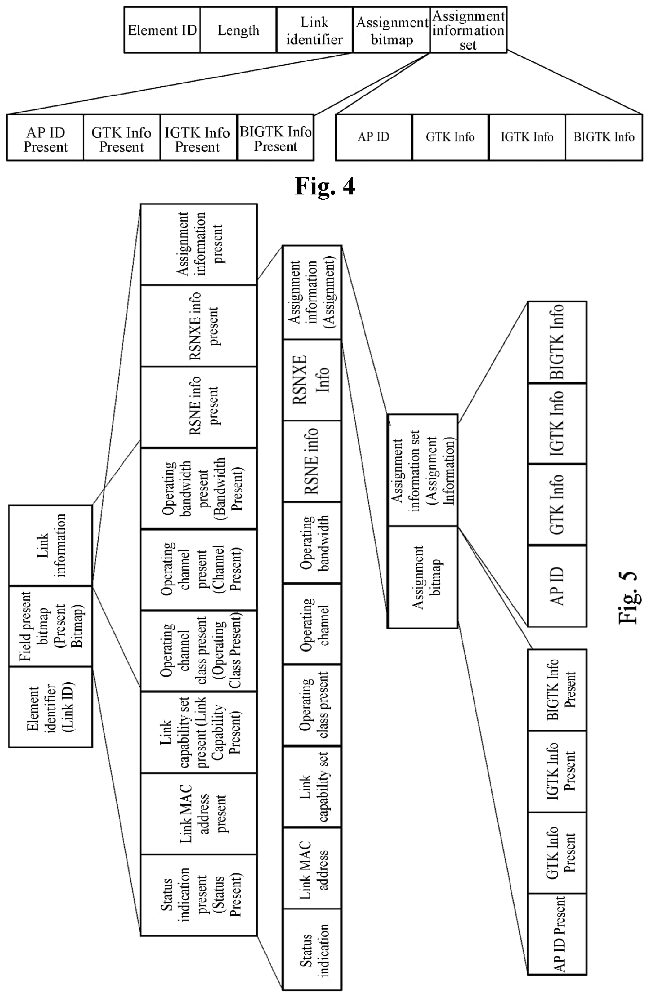

In the embodiments of the present disclosure, referring to FIG. 4, the multi-link configuration information includes the element identification information (Element ID) field, the field length information field, the link identifier information field, the assignment bitmap information field, and the assignment information set field. The assignment bitmap information field includes the access point identification information indication (AP ID Present) field, the group temporary key information indication (GTK Info Present) field, the integrity group temporary key information indication (IGTK Info Present) field, and the beacon frame integrity group temporary key information indication (BIGTK Info Present) field. The assignment information set field includes an access point identification information field, a group temporary key information (GTK Info) field, an integrity group temporary key information (IGTK Info) field, and a beacon frame integrity group temporary key information (BIGTK Info) field. The description of each field in the multi-link configuration information may be as shown in Table 2:

**Table 2 Descriptions of Multi-link Configuration Information Fields**

| Field Name | Field Description | Remark |
|---|---|---|
| Element ID | Element ID information | |
| Length | Field length information | |
| Link identifier | Link identifier field | |
| Assignment Bitmap | Assignment bitmap information | |
| Assignment information | Assignment information set | |
| AP ID Present | AP identifier information present | Located in the assignment |
| GTK info Present | GTK information present | bitmap field, where each present bit indicates whether each field is carried |
| IGTK info Present | BIGTK info Present | |
| BIGTK info Present | BIGTK information present | |
| AP ID | AP identifier information | Located in the assignment information field |
| GTK info | GTK information | |
| IGTK info | IGTK information | |
| BIGTK info | BIGTK information | |

In some embodiments of the present disclosure, the method further includes: encrypted transmission of the multi-link configuration information including the received multicast key information
In the embodiments of the present disclosure, the encryption of the multicast key information may be achieved by encrypting the multi-link configuration information that includes the received multicast key information, and the encrypted multi-link configuration information may be transmitted through the second multi-link information frame or the third multi-link information frame.

Based on the foregoing embodiments of the present disclosure, the multi-link configuration information includes the element identification information field, a field present bitmap field, and a link information field. The field present bitmap field includes a status indication presence field, a link media access control layer address presence field, a link capability set presence field, an operating channel class presence field, an operating channel presence field, an operating bandwidth presence field, a robust security network element presence field, an extended robust security network element presence field, and an assignment information presence field. The link information field includes a status indication field, a link media access control layer address field, a link capability set field, an operating channel class field, an operating channel field, an operating bandwidth field, a robust security network element field, an extended robust security network element field, an assignment information field, an assignment bitmap information field, and an assignment information set field. The assignment bitmap information field includes an access point identification information indication field, a group temporary key information indication field, an integrity group temporary key information indication field, and a beacon frame integrity group temporary key information indication field. The assignment information field includes a group temporary key information field, an integrity group temporary key information field, and a beacon frame integrity group temporary key information field.

Specifically, referring to FIG. 5, the multi-link configuration information according to the embodiments of the present disclosure may be composed of the element identification information field, the field present bitmap field, and the link information field. The field present bitmap field includes the status indication presence field, the link media access control layer address presence field, the link capability set presence field, the operating channel class presence field, the operating channel presence field, the operating bandwidth presence field, the robust security network element presence field, the extended robust security network element presence field, and the assignment information presence field. The link information field includes the status indication field, the link media access control layer address field, the link capability set field, the operating channel class field, the operating channel field, the operating bandwidth field, the robust security network element field, the extended robust security network element field, the assignment information field, the assignment bitmap information field, and the assignment information set field. The assignment bitmap information field includes the access point identification information indication field, the group temporary key information indication field, the integrity group temporary key information indication field, and the beacon frame integrity group temporary key information indication field. The assignment information field includes the group temporary key information field, the integrity group temporary key information field, and the beacon frame integrity group temporary key information field. The description of each field may be shown in Table 3:

**Table 3 Descriptions of Multi-link Configuration Information Fields**

| Field Name | Field Description | Remark |
|---|---|---|
| Link ID | Link identifier | |
| Present Bitmap | Field presence bitmap information | |
| Link Info | Link information | |
| Status Present | Status indication presence | Located in the Present bitmap field, where each present bit indicates whether each field is carried |
| Link MAC address Present | Link MAC address present | |
| Link Capability Present | Link capability set present | |
| Operating Class Present | Operating channel class present | |
| Channel Present | Operating channel present | |
| Bandwidth Present | Operating bandwidth present | |
| RSNE Info Present | Robust security network element present | |
| RSNXE Info Present | Extended robust security network element present | |
| Assignment Present | Assignment information present | |
| Status | Status indication | |
| Link MAC address | Link MAC address | |
| Link Capability | Link capability set | |
| Operating Class | Operating channel class | |
| Channel | Operating channel | Including a primary |
| | | operating channel and a secondary operating channel |
| Bandwidth | Operating bandwidth | |
| RSNE Info | Robust security network element | |
| RSNXE Info | Extended robust security network element | |
| Assignment | Assignment information | Indicating information assigned to a peer end |
| Assignment Bitmap | Assignment bitmap information | |
| Assignment information | Assignment information set | |
| AP ID Present | AP identifier information present | Located in the assignment bitmap field, where each present bit indicates whether each field is carried |
| GTK info Present | GTK information present | |
| IGTK info Present | IGTK information present | |
| BIGTK info Present | BIGTK information present | |
| AP ID | AP identifier information | Located in the assignment information field |
| GTK info | GTK information | |
| IGTK info | IGTK information | |
| BIGTK info | BIGTK information | |

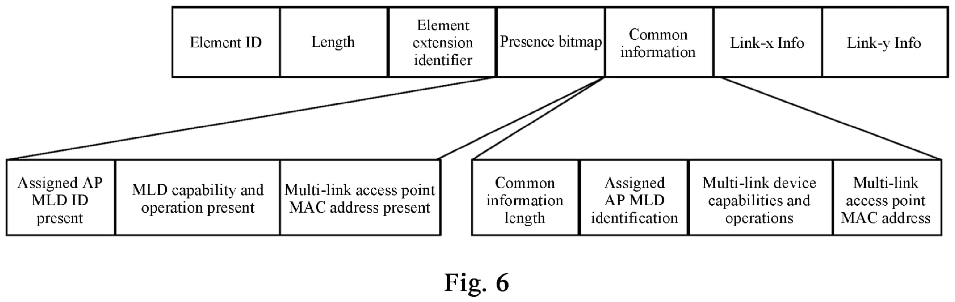

In some other embodiments of the present disclosure, referring to FIG. 6, the multi-link configuration information may include an element identifier field, an element length field, an element extension identifier, a presence bitmap field, a common information field, a link X information field, a link Y information field, and a common information field. The presence bitmap field may include an access point multi-link device identification presence field, a multi-link device capability and operation presence field, and a multi-link access point media access control layer address information presence field. The common information field may include a common information length field, an access point multi-link device identification information field, a multi-link device capability and operation field, and a multi-link access point media access control layer address information field. The descriptions of the fields of the multi-link configuration information may be shown in Table 4 as below:

**Table 4 Descriptions of Multi-link Configuration Information Fields**

| Field Name | Field Description | Remark |
|---|---|---|
| Element ID | Element identifier | |
| Length | Total element length | |
| Element ID Extension | Element extension identifier | |
| Presence Bitmap | Presence bitmap field | |
| Common Info | Common information field | |
| Link-x Info | Link X information field | |
| Link-y Info | Link Y information field | |
| Assigned AP MLD ID Present | Assigned AP MLD ID information present | Each present bit indicates whether each field is carried |
| MLD Capabilities and Operations Present | MLD capability and operation information present | |
| AP MLD MAC Address Present | Multi-link access point MAC address information present | |
| Common Info Length | Common information length | Included in the common information field |
| Assigned AP MLD ID | Assigned AP MLD identification information | |
| MLD Capabilities And Operations | Multi-link device capabilities and operations | |
| AP MLD MAC Address | Multi-link access point MAC address | |

Based on the foregoing embodiments of the present disclosure, an element transmitted in an encrypted manner includes a padding field, which is configured to pad a byte length of the element.

In the embodiments of the present disclosure, the element transmitted through encryption may further include the padding field. The padding field may pad the byte length of the element transmitted through encryption, such that the byte length of the encrypted transmission may satisfy a multiple of 16 bytes, a multiple of 8 bytes, or the like.

Based on the foregoing embodiments of the present disclosure, the information frame includes at least one of the following: the management frame or the data frame.

In the embodiments of the present disclosure, the first multi-link information frame, the second multi-link information frame, the third multi-link information frame, and other information frames may be management frames or data frames. For example, the management frame may include the action frame or the authentication frame, and the data frame may include the EAPOL frame.

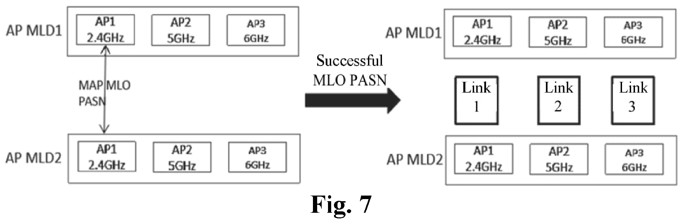

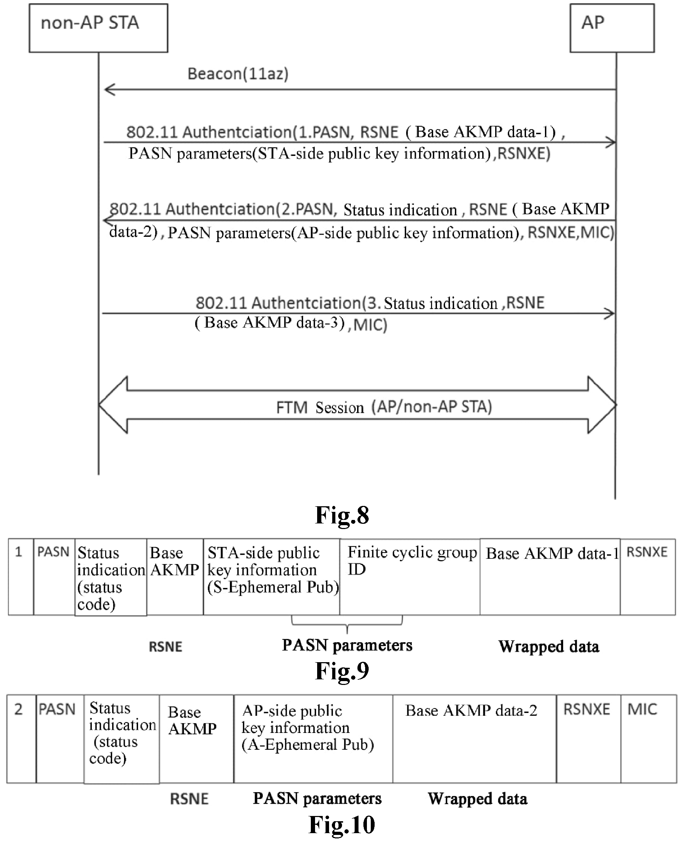

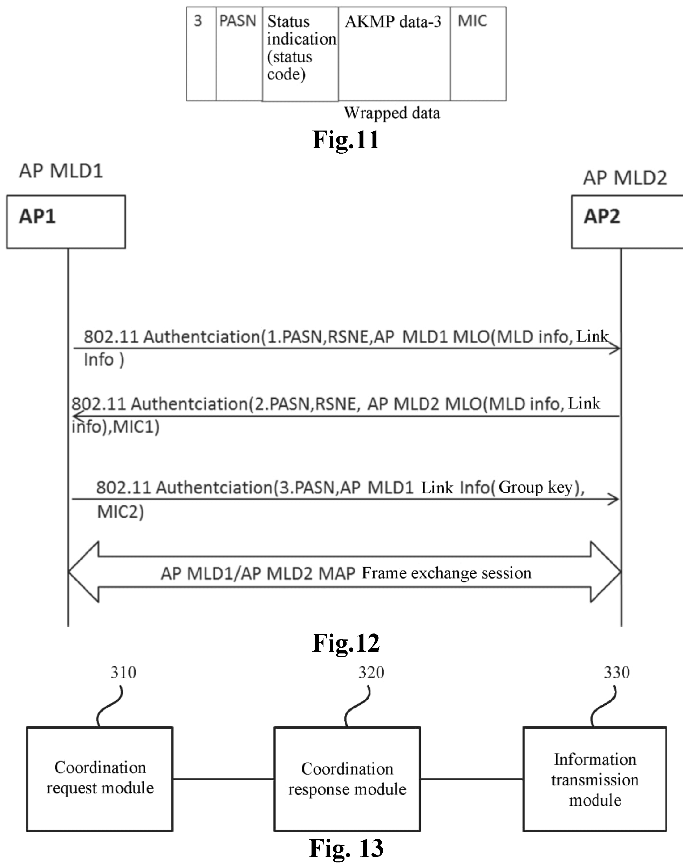

In an exemplary implementation, the multi-link information transmission in a multi-access point coordination scenario is described using the PASN protocol as an example. PASN frames are used to transmit multi-link information, and the multi-link information may include multi-link coordination request information and response information. Multicast key information required for one or more coordination links, as well as AP ID information assigned on each link, are transmitted in the encrypted manner. When two AP MLDs perform coordinated operations across the plurality of links, an information exchange process across the plurality of links can be implemented by using a single PASN frame exchange, thereby improving channel utilization efficiency. As shown in FIG. 7, AP MLD1 and AP MLD2 complete a PASN handshake process on the 2.4GHz link, and after a multi-link connection is established, coordination information frames may be exchanged across the three links. In the embodiments of the present disclosure, a PASN protocol frame may be a pre-association security negotiation protocol frame defined in 802.11az. An IEEE 802.11az working group completes the definition of a final version. As a next-generation positioning technology, 802.11az is characterized by improvements to a physical layer based on high efficient (HE) PHY defined in a Wi-Fi 6 protocol. For example, an HE ranging PPDU defined by the 11az ranging technology includes an HE ranging NDP and an HE trigger based (TB) ranging null data packet (NDP), and allows an STA to perform ranging with a plurality of APs, ultimately enabling multi-point positioning. In addition, the AP and the STA supporting 802.11az functions perform ranging and positioning by establishing an FTM session. In order to provide security protection for the FTM session, 802.11az defines a pre-association security negotiation protocol, that is, through the exchange of three PASN authentication frames, PTK is generated, and the PTK is used to encrypt an FTM frame, so as to prevent sniffing and attack by third parties. The exchange of the three PASN authentication frames and the FTM session are shown in FIG. 8. The exchange process of the three PASN authentication frames is described as follows:
(i) A non-AP STA transmits a first PASN authentication frame to the AP, including a frame number and frame type information (1.PASN), an STA-side robust security network element (RSNE, including an "authentication and key management protocol" (AKMP) selected by the STA), PASN parameters (including STA-side public key S-Ephemeral Pub, finite cyclic group ID, etc.), AKMP data-1 information located in a wrapped data field corresponding to the AKMP in the RSNE, and an STA-side robust security network extension element (RSNXE). A frame format is shown in FIG. 9.
(ii) After receiving the foregoing PASN authentication frame, the AP side transmits a second PASN authentication frame to the non-AP STA, including a frame number and frame type information (2.PASN), status indication information (status code), an AP-side robust security network element (RSNE, including AKMP information selected by the AP), PASN parameters (including AP-side public key information A-Ephemeral Pub), and AP-side robust security network extension element (RSNXE). A frame format is shown in FIG. 10.
(iii) After receiving the foregoing PASN authentication frame, the non-AP STA side transmits a third PASN authentication frame to the AP, including a frame number and frame type information (3.PASN), status indication information (status code), key suite information AKMP selected by the STA, a PTK generated by the STA according to the public key information carried in the first frame and the second frame, and information MIC2 for frame integrity check, which is derived from the PTK according to a certain algorithm. A frame format is shown in FIG. 11.

In the embodiments of the present disclosure, referring to FIG. 12, the multi-link information transmission process may include the following processes:
Step 1: A first multi-link network device (AP MLD1) transmits a first multi-link authentication frame containing multi-link information requesting coordination to a second multi-link access point (AP MLD2) on a first link.
Step 2: After receiving the first authentication frame, the AP MLD2 transmits a second authentication frame to the AP MLD1 over the first link, which includes response information for the requested multi-link coordination and multi-link assignment information.
Step 3: After receiving the second authentication frame, the AP MLD1 transmits a third authentication frame to the AP MLD2, containing assignment information for a plurality of links.

In some embodiments of the present disclosure, the multi-link coordination request information in step (1) includes identification information of each link of the AP MLD1, such as link ID and/or link MAC address, and link configuration information such as an operating channel, a bandwidth, and a primary channel number, may include MLD information such as AP MLD MAC address information of the AP MLD1, or may link capability set information.

In some embodiments of the present disclosure, the multi-link coordination response information in step (2) includes identification information of each link of the AP MLD2, such as link ID and/or link MAC address, and link configuration information such as an operating channel, a bandwidth, and a primary channel number, and may include MLD information such as AP MLD MAC address information of the AP MLD2, and requested link coordination status information, such as an indication of whether MAP coordination operations are allowed on one or more links. The received multicast key information of each link of the AP MLD2 side that allows coordination is further included, such as GTK for decrypting MAP multicast data and management frames, IGTK for authenticating MAP multicast management frames, IGTK-2 for authenticating MAP multicast control frames, and BIGTK information for authenticating beacon frames. That is, the AP MLD2 transmits data by using the multicast keys, and the link corresponding to the AP MLD1 uses the multicast keys to decrypt and authenticate received data.

In some embodiments of the present disclosure, in step (2), when a link coordination status indicates an unsuccessful status, link information and assigned group key information and ID information are not present on the corresponding link of the AP MLD2.

In some embodiments of the present disclosure, the multi-link information in step (3) includes received multicast key information of each link of the AP MLD1 side, such as GTK for decrypting MAP multicast data and management frames, IGTK for authenticating MAP multicast management frames, IGTK-2 for authenticating MAP multicast control frames, and BIGTK information for authenticating beacon frames. The AP MLD1 transmits data by using the multicast keys, and the link corresponding to the AP MLD2 uses the multicast keys to decrypt and authenticate received data.

In some embodiments of the present disclosure, when the links of the AP MLD1 and the AP MLD2 use the same multicast keys, only one copy of multicast key configuration information for each link with a successful request is transmitted in the second authentication frame or the third authentication frame.

In some embodiments of the present disclosure, in step (2) and step (3), the multi-link configuration information further includes AP ID information assigned for each opposite link.

In some embodiments of the present disclosure, in step (2) or step (3), when the AP ID is unidirectionally assigned, the assignment is performed in the multi-link configuration information in step (2) or step (3).

In some embodiments of the present disclosure, in step (2) or step (3), when the AP ID is the same on each link, the AP ID is assigned in the MLD information, such as the assigned MLD ID information.

In some embodiments of the present disclosure, in step (2) or step (3), when the AP ID is different on each link, the AP ID is assigned in the link information.

In some embodiments of the present disclosure, only the multicast key information is transmitted in the encrypted manner, for example, using an encrypted data element (EDE).

In some embodiments of the present disclosure, the multicast keys and the AP ID information are transmitted in the encrypted manner, for example, using the EDE.

In some embodiments of the present disclosure, the multi-link configuration information including multicast key information is transmitted in the encrypted manner, for example, using the EDE.

In some embodiments of the present disclosure, the EDE may further include a padding field at the end of the element. For example, when the EDE field is less than 16 bytes or not a multiple of 8 bytes, one or more 0xdd or 0x00 bytes are appended to the end of the EDE to make the total element length 16 bytes or a multiple of 8 bytes.

FIG. 13 is a schematic structural diagram of a multi-link information transmission apparatus according to an embodiment of the present disclosure. The apparatus may perform the method of multi-link information transmission according to any embodiment of the present disclosure, and has corresponding functional modules and beneficial effects for performing the method. The apparatus may be implemented by software and/or hardware. As shown in FIG. 13, the apparatus according to this embodiment of the present disclosure specifically includes: a coordination request module 310, a coordination response module 320, and an information transmission module 330.

The coordination request module 310 is configured to transmit, by a first multi-link device and over a first link, a first multi-link information frame including multi-link coordination request information to a second multi-link device;
the coordination response module 320 is configured to receive, by the first multi-link device and over the first link, a second multi-link information frame transmitted by the second multi-link device, where the second multi-link information frame includes multi-link configuration information in response to the multi-link coordination request information; and
the information transmission module 330 is configured to transmit, by the first multi-link device and to the second multi-link device, a third multi-link information frame carrying the multi-link configuration information.

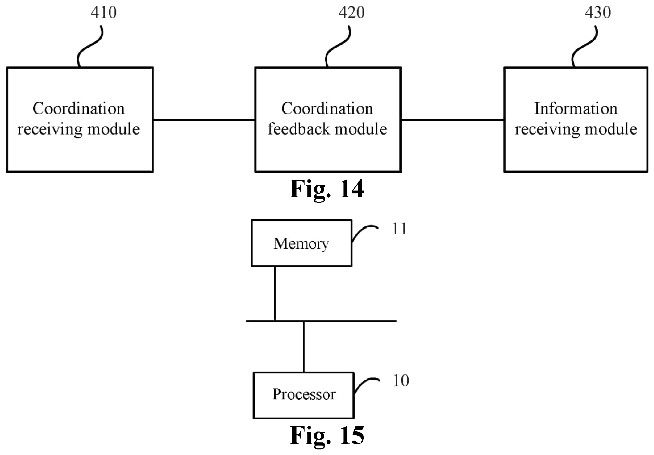

FIG. 14 is a schematic structural diagram of another multi-link information transmission apparatus according to an embodiment of the present disclosure. The apparatus may perform the method of multi-link information transmission according to any embodiment of the present disclosure, and has corresponding functional modules and beneficial effects for performing the method. The apparatus may be implemented by software and/or hardware. As shown in FIG. 14, the apparatus according to this embodiment of the present disclosure specifically includes: a coordination receiving module 410, a coordination feedback module 420, and an information receiving module 430.

The coordination receiving module 410 is configured to receive, by a second multi-link device and over a first link, a first multi-link information frame, where the first multi-link information frame includes multi-link coordination request information and is transmitted by a first multi-link device.

The coordination feedback module 420 is configured to transmit, by the second multi-link device and over the first link, a second multi-link information frame to the first multi-link device, where the second multi-link information frame includes multi-link configuration information in response to the multi-link coordination request information.

The information receiving module 430 is configured to receive, by the second multi-link device, a third multi-link information frame that carries the multi-link configuration information and that is transmitted by the first multi-link device.

Based on the foregoing embodiments of the present disclosure, the multi-link coordination request information includes at least one of the following:
identification information of each link of the first multi-link device, a link configuration information set, a multi-link device information set, or link capability set information.

Based on the foregoing embodiments of the present disclosure, the multi-link configuration information in the second multi-link information frame includes at least one of the following:
identification information of each link of the second multi-link device, a link configuration information set, a multi-link device information set, link coordination status information, or received multicast key information of each link of the first multi-link device.

Based on the foregoing embodiments of the present disclosure, the link coordination status information in the multi-link configuration information of the second multi-link information frame indicates an unsuccessful status, and the second multi-link information frame does not present at least one of: identification information of each link of the second multi-link device, link configuration information, multi-link device information, or received multicast key information of each link of the first multi-link device.

Based on the foregoing embodiments of the present disclosure, the multi-link configuration information in the third multi-link information frame includes at least one of the following:
received multicast key information of each link of the second multi-link device.

Based on the foregoing embodiments of the present disclosure, multicast keys of the first multi-link device and the second multi-link device are the same, and one of the second multi-link information frame or the third multi-link information frame carries the received multicast key information of each link.

Based on the foregoing embodiments of the present disclosure, the method further includes at least one of the following:
the multi-link configuration information of the second multi-link information frame carries access point identification information assigned for the first multi-link device at each link; or
the multi-link configuration information of the third multi-link information frame carries access point identification information assigned for the second multi-link device at each link.

Based on the foregoing embodiments of the present disclosure, the method further includes: assigning the access point identification information unidirectionally, where the multi-link configuration information in one of the second multi-link information frame or the third multi-link information frame carries the access point identification information assigned to each link.

Based on the foregoing embodiments of the present disclosure, the method further includes: the access point identification information assigned on all links being the same, and the access point identification information being carried in the multi-link device information set of the second multi-link information frame or the third multi-link information frame.

Based on the foregoing embodiments of the present disclosure, the method further includes: access point identifications assigned on all the links being different, and the access point identification information being carried in the link configuration information set of the second multi-link information frame or the third multi-link information frame.

Based on the foregoing embodiments of the present disclosure, the received multicast key information in the second multi-link information frame or the third multi-link information frame is transmitted in an encrypted manner.

Based on the foregoing embodiments of the present disclosure, the received multicast key information includes an element number information field, a field length information field, a link identifier field, a group temporary key information field, an integrity group temporary key information field, and a beacon frame integrity group temporary key information field.

Based on the foregoing embodiments of the present disclosure, the received multicast key information and the access point identification information in the multi-link configuration information are transmitted in the encrypted manner.

Based on the foregoing embodiments of the present disclosure, the multi-link configuration information includes an element identification information field, the field length information field, a link identifier information field, an assignment bitmap information field, and an assignment information set field, where the assignment bitmap information field includes an access point identification information indication field, a group temporary key information indication field, an integrity group temporary key information indication field, and a beacon frame integrity group temporary key information indication field, and the assignment information set field includes an access point identification information field, a group temporary key information field, an integrity group temporary key information field, and a beacon frame integrity group temporary key information field.

Based on the foregoing embodiments of the present disclosure, the method further includes: encrypted transmission of the multi-link configuration information including the received multicast key information.

The multi-link configuration information includes the element identification information field, a field present bitmap field, and a link information field. The field present bitmap field includes a status indication presence field, a link media access control layer address presence field, a link capability set presence field, an operating channel class presence field, an operating channel presence field, an operating bandwidth presence field, a robust security network element presence field, an extended robust security network element presence field, and an assignment information presence field. The link information field includes a status indication field, a link media access control layer address field, a link capability set field, an operating channel class field, an operating channel field, an operating bandwidth field, a robust security network element field, an extended robust security network element field, an assignment information field, an assignment bitmap information field, and an assignment information set field. The assignment bitmap information field includes the access point identification information indication field, the group temporary key information indication field, the integrity group temporary key information indication field, and the beacon frame integrity group temporary key information indication field. The assignment information field includes the group temporary key information field, the integrity group temporary key information field, and the beacon frame integrity group temporary key information field.

Based on the foregoing embodiments of the present disclosure, the element transmitted through encryption includes a padding field, which is for padding a byte length of the element.

Based on the foregoing embodiments of the present disclosure, the information frame includes at least one of the following: a management frame or a data frame.

FIG. 15 is a schematic structural diagram of an electronic device according to an embodiment of the present disclosure. The electronic device includes a processor 10 and a memory 11. There may be one or more processors 10 in the electronic device. For example, one processor 10 is shown in FIG. 15. The processor 10 and the memory 11 in the electronic device may be connected through a bus or another method. A bus connection is taken as an example in FIG. 15.

The memory 11, as a computer-readable storage medium, may be configured to store software programs, computer-executable programs, and modules, such as the modules corresponding to the apparatus in the embodiments of the present disclosure (the coordination request module 310, the coordination response module 320, and the information transmission module 330, or the coordination receiving module 410, the coordination feedback module 420, and the information receiving module 430). The processor 10 executes various functional applications and data processing of the electronic device by running the software programs, instructions, and the modules stored in the memory 11, thereby implementing the foregoing method of multi-link information transmission.

The memory 11 may mainly include a program storage area and a data storage area, where the program storage area may store an operating system and an application program needed by at least one function; and the data storage area may store data, etc. created according to the usage of the electronic device. In addition, the memory 11 may include a high-speed random access memory and may further include a non-volatile memory, such as at least one disk storage device, flash memory, or another non-transitory solid-state storage device. In some examples, the memory 11 may further include memories which are remotely disposed relative to the processor 10, and these remote memories may be connected to the electronic device through a network. Examples of the foregoing network include, but are not limited to, an Internet, an intranet, a local area network, a mobile communication network, and a combination thereof.

An embodiment of the present disclosure further provides a storage medium including computer-executable instructions. The computer-executable instructions, when executed by a computer processor, are configured to perform a method of multi-link information transmission. The method includes:
transmitting, by a first multi-link device and over a first link, a first multi-link information frame including multi-link coordination request information to a second multi-link device;
receiving, by the first multi-link device and over the first link, a second multi-link information frame transmitted by the second multi-link device, where the second multi-link information frame includes multi-link configuration information in response to the multi-link coordination request information; and
transmitting, by the first multi-link device and to the second multi-link device, a third multi-link information frame carrying the multi-link configuration information.

Alternatively, the method includes:
receiving, by a second multi-link device and over a first link, a first multi-link information frame, where the first multi-link information frame includes multi-link coordination request information and is transmitted by a first multi-link device;
transmitting, by the second multi-link device and over the first link, a second multi-link information frame to the first multi-link device, where the second multi-link information frame includes multi-link configuration information in response to the multi-link coordination request information; and
receiving, by the second multi-link device, a third multi-link information frame that carries multi-link configuration information and that is transmitted by the first multi-link device.

Through the foregoing descriptions of the implementations, those skilled in the art can clearly understand that the present disclosure may be implemented by means of software and necessary general-purpose hardware, and of course, may also be implemented by hardware, but in many cases, the former is a better implementation. Based on such an understanding, the technical solutions of the present disclosure essentially, or the part contributing to the related art may be embodied in the form of a software product. The computer software product may be stored in a computer-readable storage medium, such as computer floppy disk, a read-only memory (ROM), a random access memory (RAM), a flash, a hard disk, or a compact disc, and includes several instructions to cause a terminal device (which may be a personal computer, a server, or a network device) to perform the method of multi-link information transmission according to each embodiment of the present disclosure.

It should be noted that the various units and modules included in the foregoing apparatus embodiment are merely divided according to functional logic, but are not limited to the foregoing division, as long as the corresponding functions can be achieved; and in addition, the specific names of the functional units are merely for the convenience of distinguishing each other, and are not used to limit the scope of protection of the present disclosure.

Those of ordinary skill in the art may understand that all or some of the steps in the method disclosed above, as well as the functional modules/units in the apparatus and the device, may be implemented as software, firmware, hardware, and a suitable combination thereof.

In hardware implementations, the division between the functional modules/units mentioned in the foregoing description does not necessarily correspond to the division of physical components. For example, a single physical component may have a plurality of functions, or a single function or step may be performed collaboratively by several physical components. Some or all of the physical components may be implemented as software executed by a processor, such as a central processing unit, a digital signal processor, or a microprocessor, or may be implemented as hardware, or may be implemented as an integrated circuit, such as an application specific integrated circuit. The software may be distributed on a computer-readable medium, which may include a computer storage medium (or a non-transitory medium) and a communication medium (or a transitory medium).As is well known to those of ordinary skill in the art, the term "computer storage medium" includes volatile and non-volatile, removable and non-removable media implemented in any method or technology for storing information (e.g., a computer-readable instruction, a data structure, a program module, or other data). The computer storage medium includes, but is not limited to, a RAM, a ROM, an electrically erasable programmable read-only memory (EEPROM), a flash or another memory technology, a compact disc read-only memory (CD-ROM), a digital versatile disc (DVD), or another compact disc storage, a magnetic cassette, a magnetic tape, a magnetic disk storage, or another magnetic storage apparatus, or any other medium that may be configured to store desired information and that may be accessed by a computer. Further, as is commonly known to those of ordinary skill in the art, the communication medium typically includes a computer-readable instruction, a data structure, a program module, or other data in modulated data signals, such as carrier waves or other transmission mechanisms, and may include any information delivery medium.

According to the foregoing content, the preferred embodiments of the present disclosure are described with reference to the accompanying drawings, which do not therefore limit the scope of the claims of the present disclosure. Any modifications, equivalent substitutions, and improvements made by those skilled in the art without departing from the scope and essence of the present disclosure shall fall within the scope of the claims of the present disclosure.

## Claims

1. A method of multi-link information transmission, applied to a first multi-link access device, the method comprising:
transmitting, by a first multi-link device and over a first link, a first multi-link information frame comprising multi-link coordination request information to a second multi-link device;
receiving, by the first multi-link device and over the first link, a second multi-link information frame transmitted by the second multi-link device, wherein the second multi-link information frame comprises multi-link configuration information in response to the multi-link coordination request information; and
transmitting, by the first multi-link device and to the second multi-link device, a third multi-link information frame carrying multi-link configuration information.

2. The method according to claim 1, wherein the multi-link coordination request information comprises at least one of the following:
identification information of each link of the first multi-link device, a link configuration information set, a multi-link device information set, or link capability set information.

3. The method according to claim 1, wherein the multi-link configuration information in the second multi-link information frame comprises at least one of the following:
identification information of each link of the second multi-link device, a link configuration information set, a multi-link device information set, link coordination status information, or received multicast key information of each link of the first multi-link device.

4. The method according to claim 1, wherein link coordination status information in the multi-link configuration information of the second multi-link information frame indicates an unsuccessful status, and the second multi-link information frame does not present at least one of: identification information of each link of the second multi-link device, link configuration information, multi-link device information, or received multicast key information of each link of the first multi-link device.

5. The method according to claim 1, wherein the multi-link configuration information of the third multi-link information frame comprises:
received multicast key information of each link of the second multi-link device.

6. The method according to claim 1, wherein multicast keys of the first multi-link device and the second multi-link device are the same, and one of the second multi-link information frame or the third multi-link information frame carries received multicast key information of each link.

7. The method according to claim 1, wherein at least one of the following:
the multi-link configuration information of the second multi-link information frame carries access point identification information assigned for the first multi-link device at each link; or
the multi-link configuration information of the third multi-link information frame carries access point identification information assigned for the second multi-link device at each link.

8. The method according to claim 1, wherein:
access point identification information is assigned unidirectionally, and the multi-link configuration information in one of the second multi-link information frame or the third multi-link information frame carries the access point identification information assigned to each link.

9. The method according to claim 1, wherein:
access point identification information assigned on all links is the same, and the access point identification information is carried in a multi-link device information set of the second multi-link information frame or the third multi-link information frame.

10. The method according to claim 1, wherein:
access point identifications assigned on all links are different, and access point identification information is carried in a link configuration information set of the second multi-link information frame or the third multi-link information frame.

11. The method according to claim 1, wherein received multicast key information in the second multi-link information frame or the third multi-link information frame is transmitted in an encrypted manner.

12. The method according to claim 11, wherein the received multicast key information comprises an element number information field, a field length information field, a link identifier field, a group temporary key information field, an integrity group temporary key information field, and a beacon frame integrity group temporary key information field.

13. The method according to claim 1, wherein received multicast key information and access point identification information in the multi-link configuration information are transmitted in an encrypted manner.

14. The method according to claim 13, wherein the multi-link configuration information comprises an element identification information field, a field length information field, a link identifier information field, an assignment bitmap information field, and an assignment information set field, and
wherein the assignment bitmap information field comprises an access point identification information indication field, a group temporary key information indication field, an integrity group temporary key information indication field, and a beacon frame integrity group temporary key information indication field, and the assignment information set field comprises an access point identification information field, a group temporary key information field, an integrity group temporary key information field, and a beacon frame integrity group temporary key information field.

15. The method according to claim 1, wherein the multi-link configuration information comprising received multicast key information is transmitted in an encrypted manner.

16. The method according to claim 15, wherein the multi-link configuration information comprises an element identification information field, a field present bitmap field, and a link information field,
the field present bitmap field comprises a status indication presence field, a link media access control layer address presence field, a link capability set presence field, an operating channel class presence field, an operating channel presence field, an operating bandwidth presence field, a robust security network element presence field, an extended robust security network element presence field, and an assignment information presence field,
the link information field comprises a status indication field, a link media access control layer address field, a link capability set field, an operating channel class field, an operating channel field, an operating bandwidth field, a robust security network element field, an extended robust security network element field, an assignment information field, an assignment bitmap information field, and an assignment information set field,
the assignment bitmap information field comprises an access point identification information indication field, a group temporary key information indication field, an integrity group temporary key information indication field, and a beacon frame integrity group temporary key information indication field, and
the assignment information field comprises a group temporary key information field, an integrity group temporary key information field, and a beacon frame integrity group temporary key information field.

17. The method according to any one of claims 11, 13, or 15, wherein an element transmitted in an encrypted manner comprises a padding field, and the padding field is for padding a byte length of the element.

18. The method according to claim 1, wherein any one of the first multi-link information frame, the second multi-link information frame, or the third multi-link information frame comprises at least one of the following: a management frame or a data frame.

19. A method of multi-link information transmission, applied to a second multi-link device, the method comprising:
receiving, by the second multi-link device and over a first link, a first multi-link information frame, wherein the first multi-link information frame comprises multi-link coordination request information and is transmitted by a first multi-link device;
transmitting, by the second multi-link device and over the first link, a second multi-link information frame to the first multi-link device, wherein the second multi-link information frame comprises multi-link configuration information in response to the multi-link coordination request information; and
receiving, by the second multi-link device, a third multi-link information frame that carries multi-link configuration information and that is transmitted by the first multi-link device.

20. An electronic device, comprising:
at least one processor; and
a memory, configured to store at least one program,
the at least one program, when executed by the at least one processor, causing the at least one processor to implement the method of multi-link information transmission according to any one of claims 1 to 19.

21. A computer-readable storage medium, having at least one program stored thereon, the at least one program, when executed by at least one processor, causing the method of multi-link information transmission according to any one of claims 1 to 19 to be implemented.
